# EUROPEAN PATENT SPECIFICATION

(11) **EP 1 348 880 B1**
(45) Date of publication and mention of the grant of the patent: **17.08.2005**
(21) Application number: 03075869.2
(22) Date of filing: 27.03.2003
(51) Int. Cl.: F16D 27/00

(54) **Motorised actuator**
Motorangetriebes Stellelement
Actuateur motorisé

(30) Priority: 27.03.2002 JP 2002089379
(43) Date of publication of application: 01.10.2003
(73) Proprietor: Aisin Seiki Kabushiki Kaisha, Kariya-shi, Aichi-ken (JP)
(72) Inventor: Iwasaki, Yasuhisa, Ichinomiya-shi, Aichi-ken (JP); Suzuki, Shuetsu, Gamagori-shi, Aichi-ken (JP)
(74) Representative: Marshall, John Grahame

(56) References cited:
- DE-A- 19 742 477
- US-A- 5 680 916

## Description

### FIELD OF THE INVENTION

This invention generally relates to a motor drive device and more particularly, this invention pertains to a motor drive device which includes a worm gear and a worm wheel gear.

### BACKGROUND OF THE INVENTION

In a field of a motor drive device, a device including a worm gear and a worm wheel gear is known as a conventional work. In the device, a driven side is not affected by a load of an output side. For example, an automotive clutch operating device is disclosed in an United States Patent No.5135090. The automotive clutch operating device is characterized in that a motor rotates a worm wheel gear via a worm gear provided on an output shaft of the motor by engaging with the worm wheel gear.

In the foregoing device, when rotation of the worm wheel gear stops by a rotation restricting device, the worm wheel gear cannot stop immediately due to inertia generated at the motor shaft and the worm gear. Consequently, a gear lock may be generated between the worm gear and the worm wheel gear. The gear lock is, for example a condition that both gears come to lock by high load acting on an engaging part between the worm gear and the worm wheel gear.

US-A-5,680,916 discloses a motorized actuator, according to the preamble of claim 1, which has an elastomer covered stop.

The present invention therefore seeks to provide an improved motor drive device capable of avoiding a gear lock generated by impact force acting on an engaging part of a worm wheel gear, when rotation of the worm wheel gear is restricted.

### SUMMARY OF THE INVENTION

According to an aspect of the present invention, a motor drive device includes a housing, a motor fixed to the housing, a shaft including a worm gear and driven by the motor, a worm wheel gear, and a rotation restricting device which restricts a rotational angle of the worm wheel gear. The worm wheel gear is provided rotatably within the housing and engages with the worm gear. The rotation restricting device is provided between the worm wheel gear and the housing. When rotation of the worm wheel gear is restricted, impact force acting on an engaging part of the worm wheel gear is reduced by an absorbing function the rotation restricting device has. The rotation restricting device has a pin mounted eccentrically on the worm wheel gear and a buffer member for contacting the housing. The pin and buffer member are as described in claim 1.

### BRIEF DESCRIPTION OF THE DRAWING FIGURES

The foregoing and additional features and characteristics of the present invention will become more apparent from the following detailed description considered with reference to the accompanying drawing figures wherein:
Fig.1 is a schematic view of a motor drive device according to an embodiment of the present invention;
Fig.2 is a cross sectional view taken along the line A-A in Fig.1;
Fig.3 is a perspective view of a motor drive part in the motor drive device;
Fig.4 is a schematic view illustrating a condition that rotation of a worm wheel gear is restricted in Fig.1; and
Fig.5(a), (b) and (c) show transitional movement of an engagement between a pin and a sleeve shown in Fig.1: Fig.5(a) shows a condition that the worm wheel gear is not driven by a motor; Fig.5(b) shows a primary condition that the rotation of the worm wheel gear is restricted; Fig.5(c) shows a condition coming next to the condition of Fig.5(b).

### DETAILED DESCRIPTION OF THE INVENTION

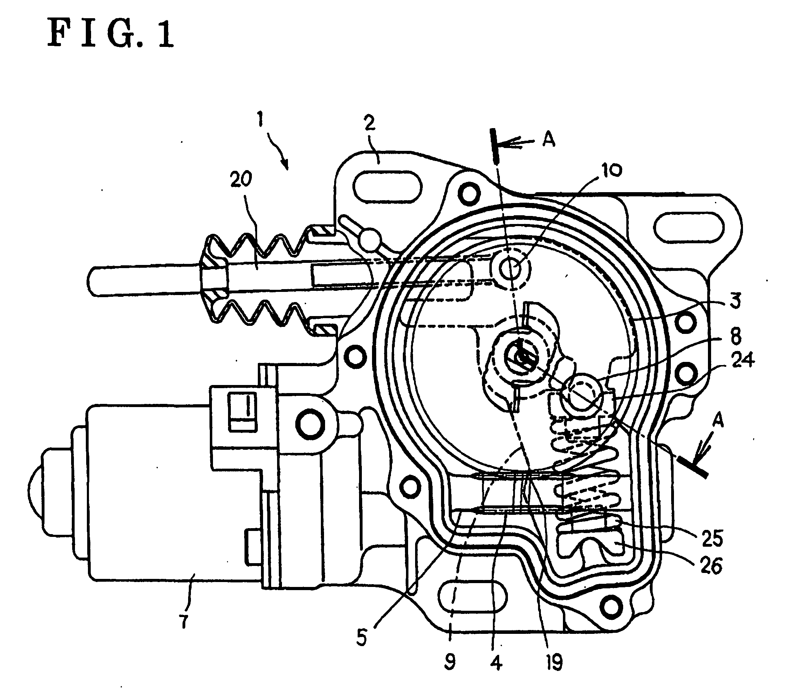

With reference to Fig.1, a motor drive device 1 according to an embodiment of the present invention is applicable to an automatic clutching device of a vehicle. Additionally, a mechanism of the motor drive device 1 is applicable to a motor drive device which includes a worm gear, a worm wheel gear and a motor and driven by the motor. The motor drive device is, for example, applicable to a window regulating device or a switching device of drive system (2WD/4WD) in a vehicle.

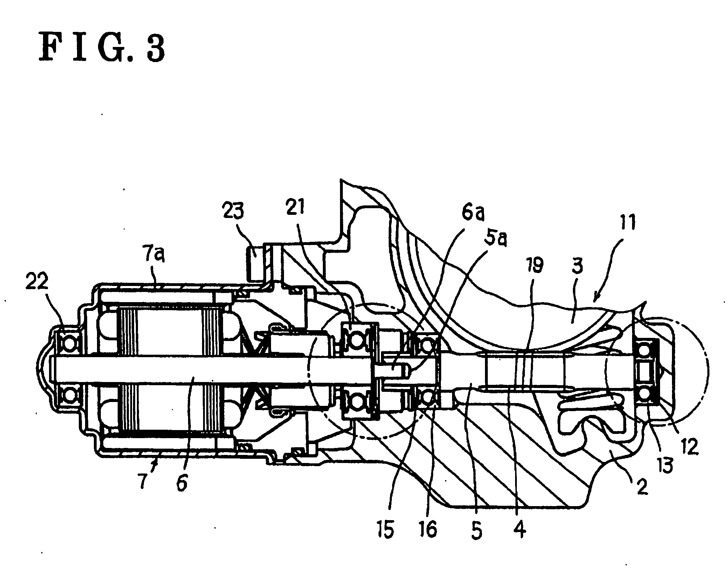

In the motor drive device 1, shown in Fig.1, a motor 7 is fixed to a housing 2 and a worm wheel gear 3 having a circular plate shape is provided within the housing 2. The worm wheel gear 3 engages with a worm gear 4 on an engaging part 19. The worm gear 4 is provided on a shaft 5 and capable of transmitting a driving torque generated by the motor 7 to the worm wheel gear 3. A motor shaft 6 transmitting the driving torque by the motor 7 is connected coaxially to the shaft 5 (referring to Fig.3).

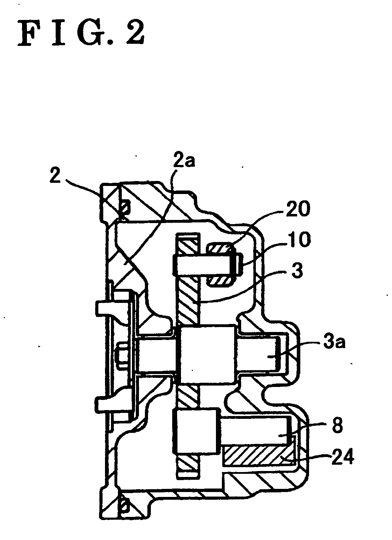

As shown in Fig.2, the worm wheel gear 3 is supported rotatably by two bearings provided on the housing 2 and a housing cover 2a via a shaft 3a. The shaft 3a is through the center of the worm wheel gear 3. Two cylinder-shaped pins 8 and 10 are radially provided on the worm wheel gear 3 and project in a direction parallel to the shaft 3a. The pin 8 is longer than the pin 10 in the axial direction. When the worm wheel gear 3 has rotated to a limit of its permitted movement, the pin 8 is brought into contact via a sleeve 24 with a stopper 9 to restrict further rotation of the worm wheel gear 3. The pin 8, sleeve 24 and stopper 9 together form a rotation restricting means between the worm wheel gear 3 and the housing 2. The stopper 9 is provided on a lateral wall of a concave portion formed within the housing 2. As shown in Fig.1, the pin 10 is connected to a connecting rod 20. When the worm wheel gear 3 rotates, a connecting part between the pin 10 and the connecting rod 20 rotates together. Movement of the connecting rod 20 is restricted in a direction approximately parallel to the motor shaft 6. Consequently, rotational movement of the worm wheel gear 3 is converted into linear movement, and the linear movement is transmitted to an output side of the motor drive device 1.

Next, with reference to Fig.3, a motor drive part 11 is described below. As shown in Fig.3, axially movable bearings 13 and 16 are mounted on each end part of the shaft 5. Dish springs 12 and 15 (cushions) are provided on a part of the housing 2 where the bearings 13 and 16 are located with one end of each of the dish springs 12 and 15 being in contact with a respective bearing 13 or 16. When an axial force acts on the shaft 5, the axial force is absorbed by the dish springs 12 and 15. Additionally, the motor shaft 6 has a boss 6a which has a defined width between two flats and is formed on an end of the shaft 6 facing the worm wheel gear 3. The shaft 5 is keyed to the motor shaft 6 via a blind axial recess 5a which has similar flats and is formed in an end of the shaft facing the motor . Consequently, the shaft 5 is axially movable relative to the motor shaft 6. One end part of the motor shaft 6 is supported by a bearing 22 housed in a motor case 7a, the other end part is supported by a bearing 21 inserted into the housing 2. Further, the motor 7 is fixed to the housing 2 via the motor case 7a and a bolt 23. In the foregoing motor drive part 11, the engaging part 19 between the worm gear 4 and the worm wheel gear 3 is provided on a portion between the bearings 13 and 16.

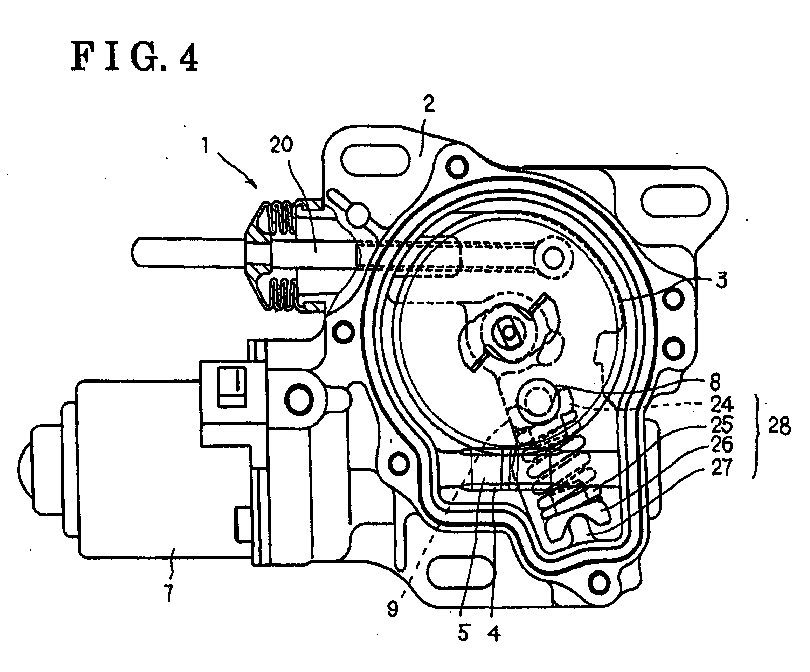

When the worm wheel gear 3 is rotated by a predetermined angle by the motor 7, the pin 8 formed on the worm wheel gear 3 is brought into contact with the stopper 9 via the sleeve 24, and the rotation is restricted. Fig.4 shows a condition that the rotation of the worm wheel gear 3 is restricted by the stopper 9. Consequently, the stopper 9 or a wall part formed on a concave portion of the housing 2 functions as a stopping device. When the worm wheel gear 3 rotates, the pin 8 on the worm wheel gear 3 rotates together with the sleeve 24 engaging with the pin 8. The sleeve 24 moves toward the stopper 9 with the pin 8, and finally contacts the stopper 9. The wall part is formed so as to contact with the whole lateral surface of the sleeve 24 when the sleeve 24 contacts with the wall part.

The pin 8 engages with the sleeve 24 via a concave portion formed on the sleeve 24 and facing the center of the worm wheel gear 3. The sleeve 24 is provided within the housing 2 and biased in one direction by a coil spring 25. The coil spring 25 is provided between the worm wheel gear 3 and the housing 2. At the worm wheel gear end, the spring is received by the sleeve 24 which acts as a spring retainer. At the housing end, the spring 25 is received by a spring retainer sleeve 26 having a central cylindrical spring retaining boss. The sleeve is pivotally mounted relative to the housing 2 on a boss 27 formed on the housing 2 and facing the worm wheel gear 3. Consequently, the sleeves 24 and 26, the spring 25, and the boss 27 form a biasing device 28 (a biasing means) which biases the worm wheel gear 3 in one direction.

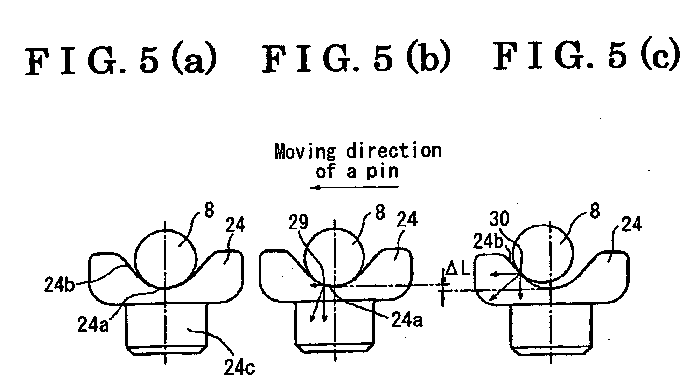

Fig.5(a), (b) and (c) show a transitional movement of engagement between the pin 8 and the sleeve 24, when the worm wheel gear 3 rotates. As shown in Fig.5(a), the concave portion of the sleeve 24 includes an arcuate part 24a and a straight part 24b. The arcuate part 24a has a curvature which is equal to or a little larger than a radius of the pin 8. The arcuate part 24a is formed on a central part of the sleeve 24 and the straight part 24b is formed adjacent to the arcuate part 24a. A smooth boundary is formed between the arcuate part 24a and the straight part 24b. When the motor 7 is not driven, the engagement between the pin 8 and the sleeve 24 is maintained in a condition shown in Fig.5(a), and the pin 8 contacts with a central part of the arcuate part 24a of the concave portion formed on the sleeve 24. The spring 25 is engaged with a cylindrical spring retaining boss 24c opposite to the concave portion of the sleeve 24 and biases the sleeve 24 in one direction.

Next, operation of the foregoing motor drive device 1 is described. When the motor 7 is driven by a power source, the motor shaft 6 rotates. The worm gear 4 provided coaxially on the motor shaft 6 also rotates, and a torque is transmitted to the worm wheel gear 3 engaging with the worm gear 4. The torque being transmitted by the worm wheel gear 3 is, as described above, converted into axial driving power (force or displacement as an output of the motor drive device 1) via the connecting rod 20 connected to the worm wheel gear 3 via the pin 10. In the foregoing operation, as shown in Fig.1, when the motor 7 is not driven, a condition of engagement between the pin 8 and the sleeve 24 is shown in Fig.5(a).

Additionally, operation of restricting the worm wheel gear 3 is described below in sequence. When the worm wheel gear 3 has rotated by a predetermined angle, as shown in Fig.4, the pin 8 on the worm wheel gear 3 contacts with the stopper 9 formed on the concave portion of the housing 2 via the sleeve 24. A contacting point between the pin 8 and the sleeve 24 shifts from the center of the arcuate part 24a to a point 29, as shown in Fig.5(b). However, the rotation of the worm wheel gear 3 cannot stop immediately due to inertia generated at the motor shaft 6, the shaft 5 and the worm wheel gear 3, so the pin 8 further shifts to the straight part 24b by the rotation of the worm wheel gear 3. The pin 8 presses the sleeve 24 toward a moving direction of the pin 8 (shown in Fig.5), the sleeve 24 is depressed, and the spring 25 is compressed. The contacting point between the pin 8 and the sleeve 24 shifts to a point 30 on the straight part 24b of the concave portion of the sleeve 24, as shown in Fig.5(c). Impact force generated on the contacting point between the pin 8 and the sleeve 24 and leading to displacement ΔL of the sleeve 24 is absorbed by the spring 25. Consequently, by absorbing the impact force, the rotation of the worm wheel gear 3 can be restricted with the gear lock being avoided on the engaging part 19 between the worm gear 4 and the worm wheel gear 3.

In the foregoing embodiment of the present invention, the rotation of the worm wheel gear3 is absorbed by movement of the pin 8 relative to the sleeve 24. The sleeve includes the arcuate part 24a and the straight part 24b formed continuously, so the rotation of the worm wheel gear 3 is not stopped immediately by a shift of the pin 8 from the arcuate part 24a to the straight part 24b when the rotation of the worm wheel gear 3 is restricted by the stopper 9. Consequently, the impact force generated on the contacting point between the pin 8 and the sleeve 24 is reduced smoothly by an absorbing function including the spring 25. The impact force acting on the engaging part 19 is also reduced, a gear lock on the engaging part 19 can be prevented, and the engaging part 19 can be protected absolutely.

This present invention is applicable to a system, for example, which generates a force and a displacement via a worm gear and a worm wheel gear by a motor and needs to restrict rotation of the worm wheel gear functionally.

## Claims

1. A motorized actuator having a drive train between a drive motor (7) and a driven output member (20) and including, in that drive train, a worm gear (4) driven by the motor (7) and a worm wheel gear (3), wherein the extent of permitted rotation of the worm wheel gear (3) is limited by rotation restricting means (8, 9, 28) **characterized in that** the rotation restricting means (8, 9, 28) comprises
a pin (8) mounted eccentrically on the worm wheel gear (3), and
a buffer member (24) carried by the pin (8) for contacting the housing (2), the buffer member (24) having a force absorbing function which reduces the impact force between teeth of the worm gear (4) and the worm wheel gear (3) when the rotation restricting means (8, 9, 28) contacts the housing (2) to prevent further rotation of the worm wheel gear (3);
wherein the buffer member (24) comprises a concave portion (24a, 24b) that engages the pin (8) but is movable relative to the pin (8).

2. A motorized actuator according to claim 1, wherein the concave portion (24a, 24b) includes an approximately arcuate portion (24a).

3. A motorized actuator according to claim 2, wherein the concave portion (24a, 24b) includes a straight part (24b) and the impact force between teeth of the worm gear (4) and the worm wheel gear (3) is reduced by movement of the pin (8) from the arcuate portion (24a) to the straight part (24b) when the rotation restricting means (8, 9, 28) contacts the housing (2).

4. A motorized actuator according to claim 3, wherein the rotation restricting means (8, 9, 28) includes a spring means (25) urging the arcuate portion (24a) of the buffer member (24) into contact with the pin (8).

5. A motorized actuator according to claim 4, wherein the spring means (25) is a compression spring (25) in compression between a spring retainer (26) pivotally mounted relative to the housing (2) and a spring retainer portion (24c) of the buffer member (24).

6. A motorized actuator according to any preceding claim, wherein a shaft (5) mounting the worm gear (4) is provided with cushions (12, 15) for absorbing axial forces along the shaft (5) when the rotation restricting means (8, 9, 28) contacts the housing (2) to prevent further rotation of the worm wheel gear (3).

7. A motorized actuator according to claim 6, wherein the shaft (5) is carried on bearings (13, 16), and the cushions (12, 15) are received between shoulders on the shaft (5) and the bearings (13, 16).

8. A motorized actuator according to claim 7, wherein the worm gear (4) is provided on the shaft between the bearings (13, 16).

9. A motorized actuator according to any preceding claim, wherein the rotation restricting means (8, 9, 28) also absorbs the impact force between the worm wheel gear (3) and the housing (2) when the rotation restricting means (8, 9, 28) restricts the further rotation of the worm wheel gear (3).

## Patentansprüche

1. Ein motorisiertes Stellglied, das einen Antriebsstrang zwischen einem Antriebsmotor (7) und einem angetriebenen Ausgangsbauteil (20) hat und weiter eine Schnecke (4), die durch den Motor (7) angetrieben wird, und ein Schneckenrad (3) im Antriebsstrang hat, wobei das Ausmaß der zugelassenen Drehung des Schneckenrads (3) durch eine Drehungsbeschränkungseinrichtung (8, 9, 28) begrenzt wird, **dadurch gekennzeichnet, dass**
die Drehungsbeschränkungseinrichtung (8, 9, 28)
einen Bolzen (8), der exzentrisch an dem Schneckenrad (3) befestigt ist, und
ein Dämpfungsbauteil (24) aufweist, das durch den Bolzen (8) zum in Berührung bringen mit dem Gehäuse (2) getragen wird, wobei das Dämpfungsbauteil (24) eine Kraft-aufnehmende Funktion hat, die die Stoßkraft zwischen den Zähnen der Schnecke (4) und des Schneckenrads (3) verringert, wenn die Drehungsbeschränkungseinrichtung (8, 9, 28) mit dem Gehäuse (2) zum Verhindern einer weiteren Drehung des Schneckenrads (3) in Berührung steht;
wobei das Dämpfungsbauteil (24) einen konkaven Abschnitt (24a, 24b) aufweist, der mit dem Bolzen (8) in Eingriff steht, aber relativ zu dem Bolzen (8) beweglich ist.

2. Ein motorisiertes Stellglied gemäß Anspruch 1, wobei der konkave Abschnitt (24a, 24b) einen annähernd bogenförmigen Abschnitt (24a) hat.

3. Ein motorisiertes Stellglied gemäß Anspruch 2, wobei der konkave Abschnitt (24a, 24b) einen geraden Anteil (24b) hat, wobei die Stoßkraft zwischen den Zähnen der Schnecke (4) und des Schneckenrads (3) durch Bewegung des Bolzens (8) von dem bogenförmigen Abschnitt (24a) zum geraden Anteil (24b) verringert wird, wenn die Drehungsbeschränkungseinrichtung (8, 9, 28) mit dem Gehäuse (2) in Berührung steht.

4. Ein motorisiertes Stellglied gemäß Anspruch 3, wobei die Drehungsbeschränkungseinrichtung (8, 9, 28) eine Federeinrichtung (25) hat, die den bogenförmigen Abschnitt (24a) des Dämpfungsbauteils (24) derart drängt, so dass dieser mit dem Bolzen (8) in Berührung steht.

5. Ein motorisiertes Stellglied gemäß Anspruch 4, wobei die Federeinrichtung (25) eine Druckfeder (25) ist, die unter Druck zwischen einer Federhalterung (26), die schwenkbar relativ zu dem Gehäuse (2) befestigt ist, und einem Federhalterungsabschnitt (24c) des Dämpfungsbauteils (24) steht.

6. Ein motorisiertes Stellglied gemäß einem vorangehenden Anspruch, wobei eine Welle (5), die die Schnecke (4) befestigt, mit Puffern (12, 15) zum Aufnehmen axialer Kräfte entlang der Welle (5) vorgesehen ist, wenn die Drehungsbeschränkungseinrichtung (8, 9, 28) mit dem Gehäuse (2) zum Verhindern einer weiteren Drehung des Schneckenrads (3) in Berührung steht.

7. Ein motorisiertes Stellglied gemäß Anspruch 6, wobei die Welle (5) auf Lagern (13, 16) getragen wird und die Puffer (12, 15) zwischen Absätzen an der Welle (5) und den Lagern (13, 16) aufgenommen werden.

8. Ein motorisiertes Stellglied gemäß Anspruch 7, wobei die Schnecke (4) an der Welle zwischen den Lagern (13, 16) vorgesehen ist.

9. Ein motorisiertes Stellglied gemäß einem vorangehenden Anspruch, wobei die Drehungsbeschränkungseinrichtung (8, 9, 28) ebenso die Stoßkraft zwischen dem Schneckenrad (3) und dem Gehäuse (2) aufnimmt, wenn die Drehungsbeschränkungseinrichtung (8, 9, 28) die weitere Drehung des Schneckenrads (3) beschränkt.

## Revendications

1. Actuateur motorisé comportant un train de transmission entre un moteur d'entraînement (7) et un élément de sortie mené (20) et incluant dans ce train de transmission, une transmission à vis sans fin (4) entraînée par le moteur (7) et une roue à dentelure hélicoïdale (3), dans lequel l'étendue de la rotation autorisée de la roue à dentelure hélicoïdale (3) est limitée par un moyen de limitation de rotation (8, 9, 28)
**caractérisée en ce que** le moyen de limitation de rotation (8, 9, 28) comprend
une broche (8) montée de manière excentrique sur la roue à dentelure hélicoïdale (3), et
un élément d'amortissement (24) supporté par la broche (8) pour contacter le logement (2), l'élément d'amortissement (24) ayant une fonction d'absorption de force qui réduit la force d'impact entre les dents de la transmission à vis sans fin (4) et de la roue à dentelure hélicoïdale (3) lorsque le moyen de limitation de rotation (8, 9, 28) contacte le logement (2) pour empêcher une rotation supplémentaire de la roue à dentelure hélicoïdale (3) ;
dans lequel l'élément d'amortissement (24) comprend une partie concave (24a, 24b) qui engage la broche (8) mais est déplaçable par rapport à la broche (8).

2. Actuateur motorisé selon la revendication 1, dans lequel la partie concave (24a, 24b) inclut une partie approximativement en forme d'arc (24a).

3. Actuateur motorisé selon la revendication 2, dans lequel la partie concave (24a, 24b) inclut une partie droite (24b) et la force d'impact entre les dents de la transmission à vis sans fin (4) et de la roue à dentelure hélicoïdale (3) est réduite par le déplacement de la broche (8) depuis la partie en forme d'arc (24a) vers la partie droite (24b) lorsque le moyen de limitation de rotation (8, 9, 28) contacte le logement (2).

4. Actuateur motorisé selon la revendication 3, dans lequel le moyen de limitation de rotation (8, 9, 28) inclut un moyen de ressort (25) poussant la partie en forme d'arc (24a) de l'élément d'amortissement (24) en contact avec la broche (8).

5. Actuateur motorisé selon la revendication 4, dans lequel le moyen de ressort (25) est un ressort de compression (25) en compression entre un dispositif de retenue de ressort (26) monté avec faculté de pivotement par rapport au logement (2) et une partie de retenue de ressort (24c) de l'élément d'amortissement (24).

6. Actuateur motorisé selon l'une quelconque des revendications précédentes, dans lequel un arbre (5) montant la transmission à vis sans fin (4) est disposé avec des coussins (12, 15) pour absorber les forces axiales le long de l'arbre (5) lorsque le moyen de limitation de rotation (8, 9, 28) contacte le logement (2) pour empêcher une rotation supplémentaire de la roue à dentelure hélicoïdale (3).

7. Actuateur motorisé selon la revendication 6, dans lequel l'arbre (5) est supporté sur des paliers (13, 16), et les coussins (12, 15) sont reçus entre les épaulements sur l'arbre (5) et les paliers (13, 16).

8. Actuateur motorisé selon la revendication 7, dans lequel la transmission à vis sans fin (4) est disposée sur l'arbre entre les paliers (13, 16).

9. Actuateur motorisé selon l'une quelconque des revendications précédentes, dans lequel le moyen de limitation de rotation (8, 9, 28) absorbe également la force d'impact entre la roue à dentelure hélicoïdale (3) et le logement (2) lorsque le moyen de limitation de rotation (8, 9, 28) limite la rotation supplémentaire de la roue à dentelure hélicoïdale (3).
